# DEMANDE DE BREVET EUROPEEN

(11) **EP 0 813 925 A1**
(43) Date de publication de la demande: **29.12.1997**
(21) Numéro de dépôt: 97401406.0
(22) Date de dépôt: 19.06.1997
(51) Int. Cl.: B23C 3/00, B23P 25/00

(54) **Procédé de fraisage assisté par laser**

(30) Priorité: 20.06.1996 FR 9607665
(71) Demandeur: SOCIETE NATIONALE D'ETUDE ET DE CONSTRUCTION DE MOTEURS D'AVIATION Snecma, F-75015 Paris (FR); ETAT FRANCAIS représenté par le DELEGUE GENERAL pour L'ARMEMENT, 75007 Paris (FR)
(72) Inventeur: Thomas, Thierry, 77000 - Chelles (FR); Vigneau, Joel Olivier, 91750 - Champcueil (FR)

(57) **Abrégé**

Le procédé de fraisage, assisté par laser consiste, en cours de fraisage d'une pièce mécanique, à diriger au moins un faisceau laser sur la pièce juste en amont de l'outil de fraisage de manière à chauffer au moins une zone de la pièce parallèle à un profil de coupe prédéterminé, puis à déplacer le faisceau laser longitudinalement sur la pièce dans le même sens et à la même vitesse Vf que la vitesse d'avance de l'outil de fraisage sur la pièce. La zone chauffée peut être une première étape et/ou une deuxième zone critique (12, 13) située juste en amont respectivement des points d'entrée et de sortie de l'arête de coupe de l'outil de fraisage dans la pièce. La zone chauffée peut également être une zone (14) de largeur égale à la largeur de la zone de coupe.

## Description

L'invention concerne un procédé de fraisage assisté par laser pour l'usinage des matériaux à haute résistance mécanique tels que par exemple, certains aciers, des alliages de titane, des superalliages, des céramiques.

L'usinage assisté par laser consiste à chauffer une pièce mécanique, en cours d'usinage de façon à atteindre dans la zone de coupe un niveau de température suffisant pour diminuer les propriétés mécaniques du matériau de la pièce et faciliter l'usinage.

Il est connu d'utiliser l'assistance par laser pour des opérations de tournage. En tournage, les pièces à usiner sont des pièces de révolution animées d'un mouvement de rotation. L'outil de coupe comporte une seule plaquette de coupequi usine la pièce en continu pendant la rotation de la pièce. Le laser est relié au support de l'outil de façon que le faisceau laser se déplace en même temps que l'outil de coupe. Le point d'impact du faisceau laser sur la pièce a donc toujours la même position par rapport à la plaquette de coupe et se déplace sur la pièce à la même vitesse et dans le même sens que la vitesse de coupe. Généralement le point d'impact du faisceau laser est localisé sur le chanfrein de la zone de coupe et situé juste devant l'outil de coupe.

L'assistance par laser est rendue difficile lorsqu'il s'agit d'usiner des pièces mécaniques parallélépipédiques par fraisage. En effet, l'outil de fraisage comporte plusieurs plaquettes de coupe qui usinent alternativement la pièce pendant la rotation de l'outil de fraisage. L'usinage est discontinu et il est difficile de chauffer la pièce sur le chanfrein de la zone de coupe juste devant chaque plaquette de coupe. Un tel procédé de chauffage nécessite l'utilisation de plusieurs faisceaux laser associés à chacune des plaquettes de coupe. Par ailleurs le temps d'application de chaque faisceau laser risque d'être insuffisant suivant la géométrie de l'outil de fraisage.

Le but de l'invention est de résoudre ces problèmes et de réaliser un procédé de fraisage assisté par laser qui soit simple à mettre en oeuvre et qui permette de diminuer efficacement les propriétés mécaniques du matériau de la pièce mécanique à usiner.

Pour cela, selon l'invention, le procédé de fraisage assisté par laser selon lequel une surface plane d'une pièce mécanique est usinée par un outil de fraisage comportant au moins une arête de coupe mise en contact avec une zone de coupe de la pièce entre un point d'entrée et un point de sortie, l'outil de fraisage se déplaçant sur la pièce à une vitesse d'avance prédéterminée et suivant une direction longitudinale parallèle à la surface plane de la pièce, caractérisé en ce qu'il consiste, en cours de fraisage, à diriger au moins un faisceau laser sur la pièce juste en amont de l'outil de fraisage de manière à chauffer au moins une zone de la pièce parallèle à un profil de coupe prédéterminé, puis à déplacer le faisceau laser longitudinalement sur la pièce dans le même sens et à la même vitesse que la vitesse de l'avance de l'outil de fraisage sur la pièce.

Dans un premier mode de réalisation de l'invention, la zone chauffée est une zone critique située juste en amont du point d'entrée de l'arête de coupe de l'outil de fraisage dans la pièce.

Dans un deuxième mode de réalisation de l'invention, la zone chauffée est une zone critique située juste en amont du point de sortie de l'arête de coupe de l'outil de fraisage dans la pièce.

Dans un troisième mode de réalisation de l'invention, la pièce mécanique est chauffée en deux zones critiques situées juste en amont des points d'entrée et de sortie de l'arête de coupe de l'outil de fraisage dans la pièce.

Dans un quatrième mode de réalisation de l'invention, la pièce mécanique est chauffée juste en amont de l'outil de fraisage sur toute une largeur de la pièce parallèle au profil de coupe prédéterminé.

D'autres particularités ou avantages de l'invention apparaitront clairement dans la suite de la description donnée à titre d'exemple non limitatif et faite en regard des figures annexées qui représentent :
- la figure 1, un schéma simplifié montrant l'usinage d'une pièce mécanique parallélépipédique par fraisage ;
- la figure 2, un premier exemple de chauffage d'une pièce mécanique en cours de fraisage dans lequel un faisceau laser est dirigé sur le chanfrein d'une zone de coupe ;
- les figures 3, 4, 5 représentent trois exemples de chauffage d'une pièce mécanique en cours de fraisage, selon différents modes de réalisation de l'invention.

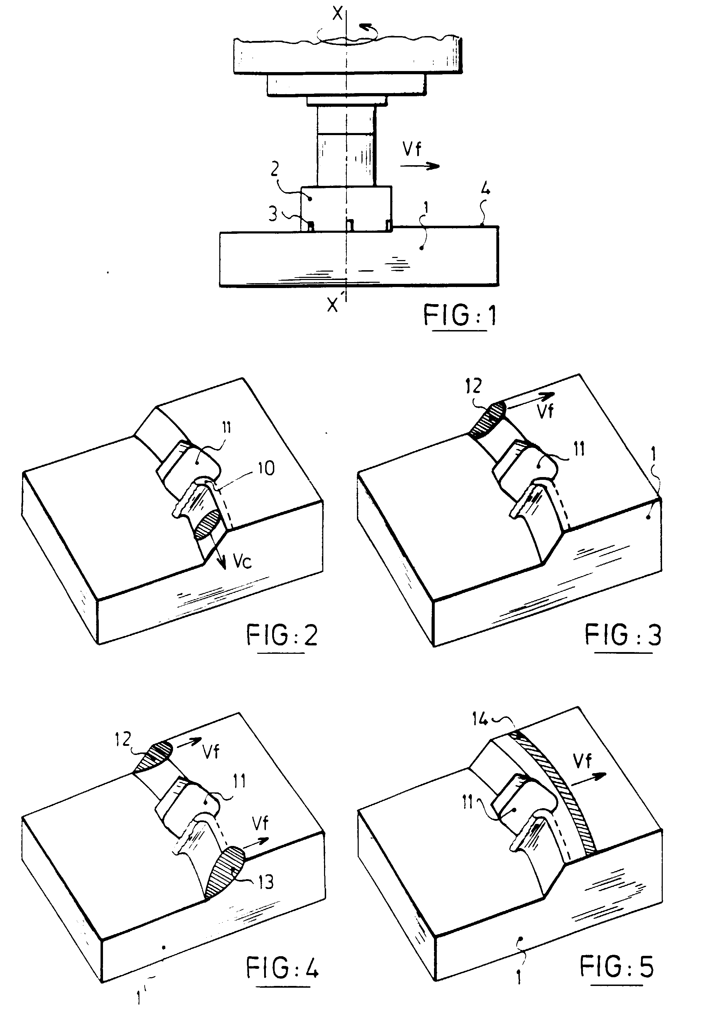

Le schéma représenté sur la figure 1 montre l'usinage d'une pièce mécanique parallélépipédique 1 au moyen d'un outil de fraisage 2. L'outil de fraisage est animé d'un mouvement de rotation autour d'un axe XX' perpendiculaire à la surface 4 de la pièce en cours de fraisage. L'outil de fraisage comporte plusieurs plaquettes de coupe 3 dont les arêtes de coupe sont alternativement en contact avec la pièce lorsque l'outil de fraisage tourne autour de son axe. L'usinage est donc discontinu et est effectué successivement par les différentes arêtes de coupe de l'outil de fraisage. Pour usiner toute la surface 4 de la pièce mécanique 1, l'outil de fraisage se déplace sur la surface 4 à une vitesse d'avance vf prédéterminée et suivant une direction longitudinale parallèle à la surface en cours d'usinage.

La figure 2 représente un premier exemple de chauffage d'une pièce mécanique en cours de fraisage. Sur cette figure, le faisceau laser est dirigé sur le chanfrein de la zone de coupe 10 juste devant l'arête de coupe 11. La zone chauffée se déplace à la même vitesse et dans le même sens que la vitesse de coupe Vc. Ce type de chauffage est difficile à mettre en oeuvre car il nécessite plusieurs faisceaux laser associés à chacune des plaquettes de coupe. Par ailleurs, chaque faisceau laser doit se déplacer à une vitesse élevée égale à la vitesse de rotation de l'outil de fraisage de manière à toujours être localisé de la même façon par rapport à l'arête de coupe.

Les figures 3, 4, 5 représentent trois exemples de chauffage d'une pièce mécanique en cours de fraisage, selon différents modes de réalisation de l'invention.

Le type de chauffage représenté sur la figure 3 consiste à diriger le faisceau laser sur la pièce juste en amont de l'outil de fraisage et de manière à chauffer uniquement une zone critique 12 située juste en amont du point d'entrée de l'arête de coupe 11 de l'outil de fraisage dans la pièce.

Le point d'entrée d'une arête de coupe dans la pièce en cours d'usinage est un point critique dû à un choc mécanique.

Sous l'effet du choc mécanique dû à l'entrée de l'arête de coupe dans la pièce, l'outil s'use très rapidement. En chauffant cette zone critique, les propriétés mécaniques du matériau sont diminuées en cet endroit ce qui facilite l'usinage de la pièce et diminue l'usure de l'arête de coupe.

Le faisceau laser est ensuite déplacé longitudinalement sur la pièce dans le même sens et à la même vitesse Vf que la vitesse de l'avance de l'outil de fraisage. La vitesse de déplacement longitudinal de l'outil de fraisage étant nettement plus faible, généralement environ cent fois plus faible que la vitesse de rotation de l'outil de fraisage, le temps d'application du faisceau laser sur la zone chauffée est beaucoup plus important que dans le type de chauffage représenté sur la figure 2, ce qui permet de diminuer la puissance du faisceau laser et d'améliorer plus efficacement les conditions d'usinage de la pièce. Par ailleurs, ce type de chauffage est plus facile à mettre en oeuvre puisqu'il ne nécessite qu'un seul faisceau laser.

Le type de chauffage représenté sur la figure 4 consiste à chauffer deux zones critiques 12, 13 situées juste en amont des points d'entrée et de sortie de l'arête de coupe dans la pièce. Le point de sortie de l'arête de coupe est une deuxième zone critique pour l'outil de fraisage qui est soumis, en cet endroit, à des contraintes mécaniques élevées. Ces contraintes mécaniques ont tendance à écailler l'arête de coupe et à faire des bavures sur la pièce.

Le chauffage de cette deuxième zone critique permet de faciliter et d'améliorer l'usinage de la pièce.

Ce type de chauffage nécessite l'utilisation de deux faisceaux laser dirigés respectivement vers la première et la deuxième zone critique 12, 13. Les deux faisceaux laser sont déplacés longitudinalement sur la pièce dans le même sens et à la même vitesse Vf que la vitesse de l'avance de l'outil de fraisage.
Un autre type de chauffage non représenté sur les figures consiste à chauffer uniquement la deuxième zone critique 13 située en amont du point de sortie de l'arête de coupe dans la pièce. Dans ce cas un seul faisceau laser est nécessaire et est déplacé de la manière indiquée en liaison avec la figure 4.

Le type de chauffage représenté sur la figure 5 consiste à chauffer la pièce mécanique juste en amont de l'outil de fraisage sur une zone 14 parallèle au profil de coupe et de largeur égale à la largeur de la zone de coupe. Ce type de chauffage nécessite l'utilisation d'un seul faisceau laser de puissance plus élevée que pour les types de chauffage décrits en liaison avec les figures 3 et 4.

Ce faisceau laser est déplacé longitudinalement sur la pièce dans le même sens et à la même vitesse Vf que la vitesse d'avance de l'outil de fraisage.

Suivant la forme de la pièce à usiner, un type de chauffage sera choisi préférentiellement à un autre pour, par exemple, des raisons de facilité à mettre en oeuvre ou pour limiter la puissance du faisceau laser. Dans le cas d'une pièce à usiner sur une faible hauteur, il peut être avantageusement choisi de chauffer sur une zone de largeur égale à la largeur de la zone de coupe comme représenté sur la figure 5.

Si au contraire la hauteur à usiner est élevée, il est préférable de chauffer uniquement la première zone critique 12 située en amont du point d'entrée de l'arête de coupe dans la pièce.

## Revendications

1. Procédé de fraisage assisté par laser selon lequel une surface plane d'une pièce mécanique est usinée par un outil de fraisage comportant au moins une arête de coupe mise en contact avec une zone de coupe de la pièce entre un point d'entrée et un point de sortie, l'outil de fraisage se déplaçant sur la pièce à une vitesse d'avance prédéterminée et suivant une direction longitudinale parallèle à la surface plane de la pièce, caractérisé en ce qu'il consiste, en cours de fraisage, à diriger au moins un faisceau laser sur la pièce juste en amont de l'outil de fraisage de manière à chauffer au moins une zone de la pièce parallèle à un profil de coupe prédéterminé, puis à déplacer le faisceau laser longitudinalement sur la pièce dans le même sens et à la même vitesse que la vitesse de l'avance de l'outil de fraisage sur la pièce.

2. Procédé de fraisage assisté par laser selon la revendication 1, caractérisé en ce que la zone chauffée est une première zone critique (12) située juste en amont du point d'entrée de l'arête de coupe de l'outil de fraisage dans la pièce.

3. Procédé de fraisage assisté par laser selon la revendication 1, caractérisé en ce que la zone chauffée est une deuxième zone critique (13) située juste en amont du point de sortie de l'arête de coupe de l'outil de fraisage dans la pièce.

4. Procédé de fraisage assisté par laser selon la revendication 1, caractérisé en ce que la pièce mécanique est chauffée en deux zones critiques (12, 13) situées juste en amont des points d'entrée et de sortie de l'arête de coupe de l'outil de fraisage dans la pièce.

5. Procédé de fraisage assisté par laser selon la revendication 1, caractérisé en ce que la pièce mécanique est chauffée juste en amont de l'outil de fraisage sur une zone (14) parallèle au profil de coupe prédéterminé, et de largeur égale à la largeur de la zone de coupe.
